# EUROPEAN PATENT SPECIFICATION

(11) **EP 4 400 453 B1**
(45) Date of publication and mention of the grant of the patent: **18.02.2026**
(21) Application number: 21956790.6
(22) Date of filing: 10.09.2021
(51) Int. Cl.: B65G 1/137, B65G 67/20, B66F 9/06

(54) **AUTOMATIC MOVEMENT DEVICE AND DELIVERY SYSTEM**
AUTOMATISCHE BEWEGUNGSVORRICHTUNG UND ABGABESYSTEM
DISPOSITIF DE DÉPLACEMENT AUTOMATIQUE ET SYSTÈME DE DISTRIBUTION

(43) Date of publication of application: 17.07.2024
(73) Proprietor: Fuji Corporation, Chiryu-shi, Aichi 472-8686 (JP)
(72) Inventor: KAWAGUCHI Koji, Chiryu-shi, Aichi 472-8686 (JP)
(74) Representative: Grünecker Patent- und Rechtsanwälte PartG mbB
(86) International application number: PCT/JP2021/033298
(87) International publication number: WO 2023/037493

(56) References cited:
- EP-A1- 2 716 591
- JP-A- H03 172 207
- JP-A- H06 227 663
- JP-A- H06 227 663
- JP-U- H0 185 323

## Description

### Technical Field

The present description discloses an automatic movement device and a delivery system.

### Background Art

Conventionally, as an automatic movement device, there has been proposed a device including a drive unit having a right wheel, a left wheel, and a wheel drive means, a revolving shaft mechanism that supports the drive unit revolvably with respect to a top plate, and a coil spring disposed in a vertical direction around the revolving shaft mechanism in order to exert a force applied to the top plate to the right wheel and the left wheel (for example, see Patent Literature 1). In this device, the height of the automatic movement device itself can be further reduced while ensuring the traveling performance. EP 2 716 519 A1 discloses an automatic movement device according to the preamble of claim 1. JP H06 227663 A proposes to provide an article loading device capable of continuously and automatically loading articles. A lifter for a pallet is provided at a front edge of a fixed loading means. The lifter comprises rails laid perpendicular to the transport path, a trolley with an L-shaped side surface movably engaged with the rails and a pair of front and rear sending means attached to the trolley so as to be able to rise and fall individually. The trolley is driven by driving means such as a fluid cylinder or a motor. When the pair of sending means starts moving, they are raised so that the upper surface of the placed pallet is approximately aligned with the upper surface of the movable placing means, and are driven by a drive motor such as a chain and a servo mounted inside the vertical frame of the L-shaped cart by means of lifting members which are combined with a lifting mechanism to lower the cardboard boxes by any desired amount, for example, by the thickness of a bundle of cardboard boxes which is item.

### Patent Literature

Patent Literature 1: JP-A-2010-76683

### Summary of the Invention

### Technical Problem

The automatic movement device is used, for example, in a delivery system for delivering an article, but has been a problem in moving the article more efficiently. However, in Patent Literature 1, it is possible to further reduce a decrease in the movement efficiency of the article by increasing the traveling stability, but it is not sufficient and it is desired to move the article more efficiently.

The present disclosure is made to solve the above-described problems, and a main object of the present disclosure is to provide an automatic movement device and a delivery system capable of more efficiently moving an article.

The present disclosure employs the following means to achieve the main object described above.

An automatic movement device disclosed in the present description is an automatic movement device used in a delivery system configured to deliver an article, the automatic movement device including:
a vehicle body section that includes traveling wheels and that is configured to travel;
a drive section configured to drive the traveling wheels;
a loading section that is provided to the vehicle body section and that is configured to load a conveyance object or engage with a conveyance object to move the conveyance object; and
a control section configured to control the drive section and the loading section,
wherein two or more of the loading sections are provided to the vehicle body section.

In this automatic movement device, since two or more loading sections are provided to the vehicle body section, more conveyance objects can be moved. Therefore, in this automatic movement device, the movement of articles can be executed more efficiently.

### Brief Description of Drawings

Fig. 1 is a schematic view illustrating an example of delivery system 10.
Fig. 2 is a view illustrating an example of logistics center 20.
Fig. 3 is a view illustrating an example of automatic movement device 30.
Fig. 4 is a trihedral view of automatic movement device 30 connected to wheeled platform 12.
Fig. 5 is a view illustrating an example of a detection range of detection section 37.
Fig. 6 is a view illustrating an example of a lifting and lowering operation of first loading section 41.
Fig. 7 is a flowchart representing an example of an automatic movement process routine.

### Description of Embodiments

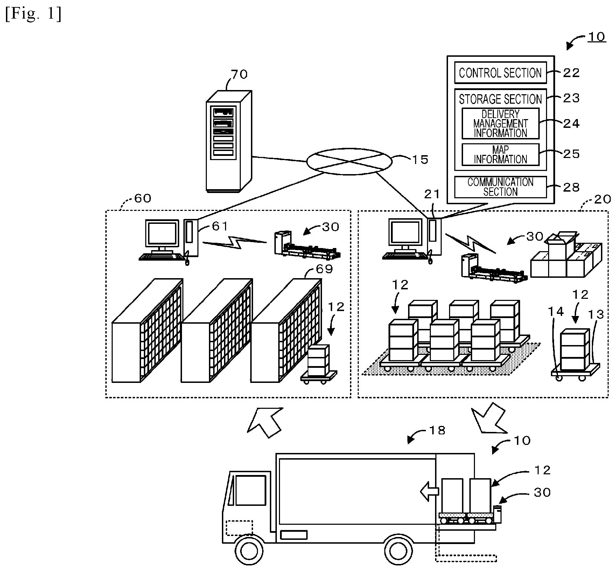

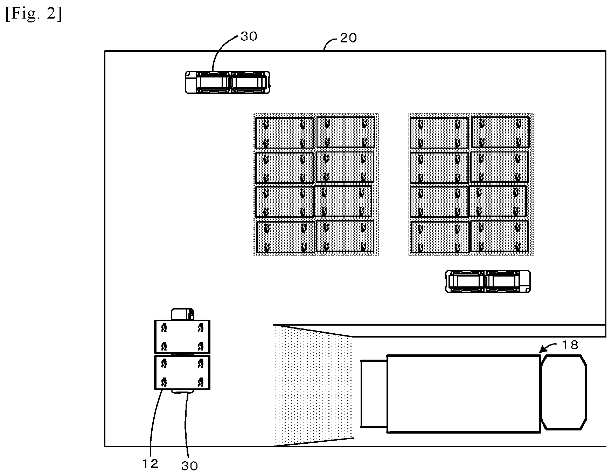

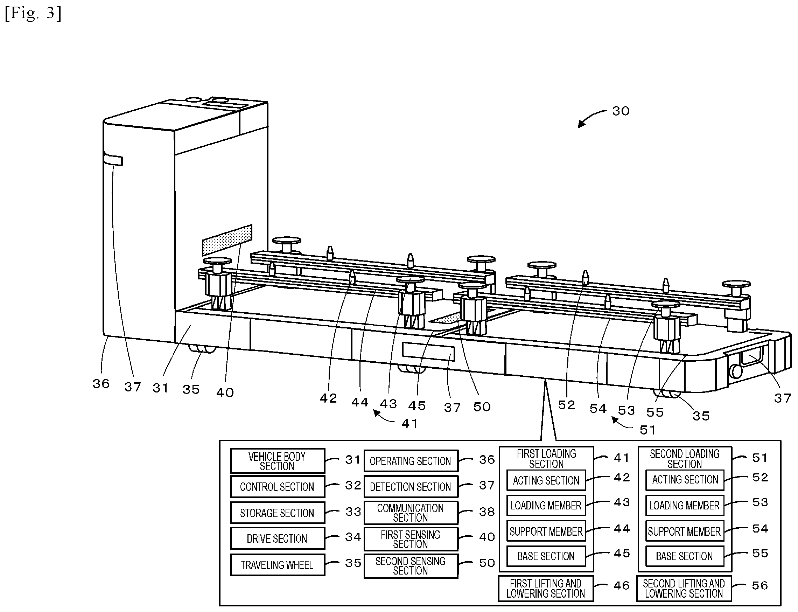

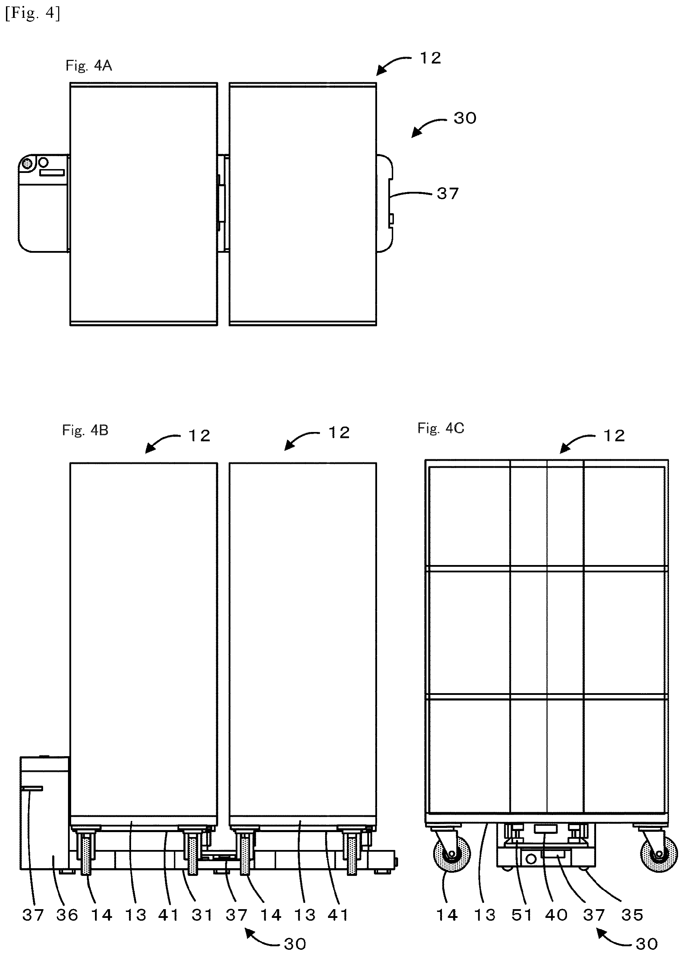

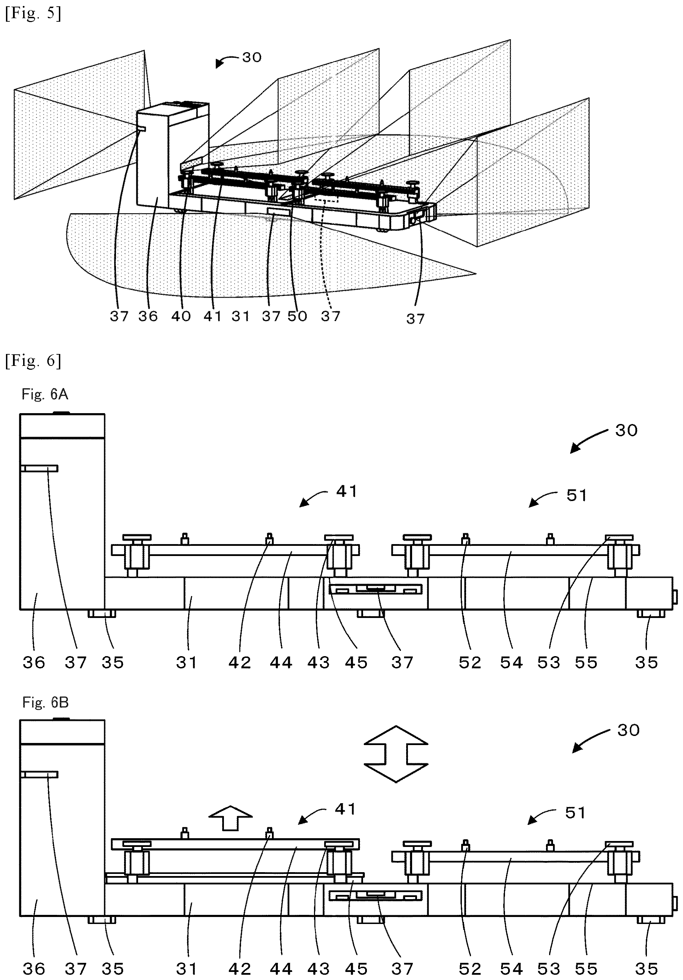

Embodiments according to the present disclosure will be described with reference to the drawings. Fig. 1 is a schematic view illustrating an example of delivery system 10. Fig. 2 is a view illustrating an example of logistics center 20. Fig. 3 is a view illustrating an example of automatic movement device 30. Fig. 4 is a trihedral view of automatic movement device 30 connected to wheeled platform 12, where Fig. 4A is a plan view, Fig. 4B is a front view, and Fig. 4C is a side view. Fig. 5 is a view illustrating an example of a detection range of detection section 37. Fig. 6 is a view illustrating an example of a lifting and lowering operation of first loading section 41. Delivery system 10 is a system that includes automatic movement device 30 configured to automatically move an article inside a specific space, and executes a process of delivering the article. Delivery system 10 will be described by way of example in which the article is transported by using wheeled platform 12 as a conveyance object, but the present invention is not particularly limited to this, and wheeled platform 12 may be omitted or other components may be used. Here, the "article" is not particularly limited as long as anything is delivered, and for example, examples of the "article" include a machine, a device, an industrial product including units and components of devices, generally used daily consumer products, foods, and fresh products. Examples of the "delivery source" and the "delivery destination" include a logistics center that collects and delivers articles, a warehouse that stores the articles, and a shop that sells the articles. In addition, examples of the "specific space" include a cargo chamber of a mobile transporter for delivering the articles and a work elevator, in addition to the above-described delivery source and delivery destination. Examples of the mobile transporter include a vehicle such as delivery vehicle 18 and a train, a ship, and an aircraft. For convenience of explanation, delivery system 10 for delivering products such as daily consumer products and fresh products by delivery vehicle 18 from logistics center 20 as the delivery source to shop 60 of the delivery destination will be mainly described.

As illustrated in Fig. 1, delivery system 10 includes logistics PC 21, shop PC 61, automatic movement device 30, and central control device 70. Delivery system 10 is used in wheeled platform 12, delivery vehicle 18, logistics center 20, shop 60, and the like.

Wheeled platform 12 is a conveyance object used to convey articles, and includes placement section 13 and casters 14 as illustrated in Figs. 1 and 4. Placement section 13 is a plate-shaped member for loading articles. Casters 14 have wheels for causing wheeled platform 12 to travel, and is disposed on a lower surface side of placement section 13. Wheeled platform 12 may be a wheeled basket. A display board on which information on a delivery destination is displayed is attached to wheeled platform 12, and an operator or automatic movement device 30 can check the delivery destination of wheeled platform 12.

Delivery vehicle 18 is a vehicle that is loaded with one or more wheeled platforms 12 and delivers articles. Delivery vehicle 18 delivers the articles between delivery bases. Here, the "delivery base" includes logistics center 20, shop 60, and the like in which the articles are collected. Delivery vehicle 18 loads wheeled platform 12 in cargo chamber 61 at logistics center 20, delivers the articles to the delivery destination, and returns empty wheeled platform 12 to logistics center 20.

Logistics center 20 is a place for collecting articles and delivering the articles to shops 60 or other logistics centers 20 in various locations. As illustrated in Fig. 2, logistics center 20 has one or more automatic movement devices 30, so that wheeled platform 12 can be automatically moved. In logistics center 20, an operator, an arm robot (not illustrated), or the like performs work for placing the articles on wheeled platform 12 corresponding to the delivery destination. Automatic movement device 30 performs work for collecting, loading, and unloading wheeled platform 12 for which the delivery destination is specified.

Logistics PC 21 is disposed in logistics center 20, and is configured as a management device that performs product management, management of automatic movement device 30, and the like in logistics center 20. Logistics PC 21 includes control section 22, storage section 23, and communication section 28. Control section 22 includes CPU and controls the entire device. Storage section 23 stores various application programs and various data files. Storage section 23 stores delivery management information 24, maintenance information 25, map information 25, and the like. Delivery management information 24 is information used for managing delivery of the articles. Map information 25 is information of a map of logistics center 20. Communication section 28 wirelessly communicates with an external device such as automatic movement device 30. Communication section 28 exchanges information with central control device 70 and shop PC 61 via network 15.

Automatic movement device 30 is a vehicle that automatically moves wheeled platform 12 as a conveyance object. Automatic movement device 30 enters a space between casters 14 on the lower surface side of placement section 13 of wheeled platform 12 and lifts and loads placement section 13 from below or is connected to wheeled platform 12 in such a way that automatic movement device 30 locks into placement section 13 and tows wheeled platform 12, thereby moving wheeled platform 12. Automatic movement device 30 is an automatic guided vehicle (AGV) that moves along a line formed on a road surface, or is an autonomous mobile robot (AMR) that moves on a free route by sensing surroundings. As illustrated in Fig. 3, automatic movement device 30 includes vehicle body section 31, control section 32, storage section 33, drive section 34, traveling wheels 35, detection section 37, and communication section 38. In addition, automatic movement device 30 includes first sensing section 40, first loading section 41, first lifting and lowering section 46, second sensing section 50, second loading section 51, and second lifting and lowering section 56. Here, for convenience of description, first sensing section 40 and second sensing section 50 are collectively referred to as a sensing section, first loading section 41 and second loading section 51 are collectively referred to as a loading section, and first lifting and lowering section 46 and second lifting and lowering section 56 are collectively referred to as a lifting and lowering section.

Vehicle body section 31 is a flat plate-shaped housing that enters the lower surface of wheeled platform 12, traveling wheels 35 are disposed on the lower surface side, the loading section is disposed on the upper surface side, and vehicle body section 31 travels. In automatic movement device 30, two loading sections, first loading section 41 and second loading section 51, are disposed on an upper surface of vehicle body section 31. On one end side of vehicle body section 31, operating section 36 having a rectangular parallelepiped shape is erected adjacent to first loading section 41. Operating section 36 is erected adjacent to first loading section 41 and higher than the main body part of vehicle body section 31. Inside operating section 36, control section 32, storage section 33, communication section 38, a storage battery for driving drive section 34, and the like are accommodated. Operating section 36 is erected in vehicle body section 31, and vehicle body section 31 can enter the lower surface of wheeled platform 12 only from the end portion on the opposite side (second loading section 51 side) of operating section 36.

Control section 32 is a controller for controlling the entire device of automatic movement device 30. Control section 32 outputs control signals and the like to the lifting and lowering section, the sensing section, drive section 34, detection section 37, and communication section 38, and inputs signals from the sensing section, detection section 37, and communication section 38. Control section 32 controls the loading section by controlling the lifting and lowering section. Control section 32 obtains a moving direction, a moving distance, a current position, and the like of automatic movement device 30 based on a driving state of drive section 34 and the like. Control section 32 controls the movement or stoppage of automatic movement device 30 based on the information from detection section 37. When moving wheeled platform 12, control section 32 is configured to cause drive section 34, the lifting and lowering section, and the like to load or engage with a conveyance object, which is to be loaded and unloaded later, onto first loading section 41 closer to operating section 36. Storage section 33 stores various application programs and various data files. Storage section 33 stores, for example, position information including positions of a delivery source and a delivery destination to which wheeled platform 12 is moved, map information of logistics center 20, and the like. The position information and the map information are acquired by communication from logistics PC 21. Communication section 38 is an interface that wirelessly exchanges information with an external device such as logistics PC 21. Control section 32 exchanges information with logistics PC 21 via communication section 38.

Drive section 34 is a motor that is connected to each of traveling wheels 35 and rotationally drives connected traveling wheels 35, thereby driving automatic movement device 30 to travel. Automatic movement device 30 includes four traveling wheels 35 and two auxiliary wheels that are driven by traveling wheels 35, and moves by rotational driving of traveling wheels 35. Traveling wheels 35 may also be mecanum wheels or omni wheels that can be moved vertically and horizontally by independent driving of four wheels. From the viewpoint of the degree of freedom of movement, it is more preferable that traveling wheels 35 are mecanum wheels. The auxiliary wheels are disposed in the middle of traveling wheels 35 and support vehicle body section 31.

Detection section 37 detects an object present around automatic movement device 30 or a distance from the object. Detection section 37 may detect the presence of the object or the distance from the object, for example, by irradiating light such as a laser, or a sound wave into the surroundings, and detecting a reflected wave. Detection section 37 includes one or more of a laser scan sensor, an imaging camera, a stereo camera, and a sonar sensor, for example. In the AGV, detection section 37 is a sensor that senses an object present in the vicinity of vehicle body section 31, and in the AMR, detection section 37 is a sensor that can sense an obstacle, a wall, or the like present in a larger area. As illustrated in Fig. 5, detection section 37 is disposed on three side surfaces of vehicle body section 31 and one front surface of operating section 36, and detects a substance present on the outer periphery of automatic movement device 30 and a distance from the substance (see Fig. 5).

First sensing section 40 is a sensor that identifies a conveyance object and/or senses a conveyance object, and is configured with, for example, a stereo camera. First sensing section 40 is disposed on a surface of operating section 36 on first loading section 41 side, and identifies and senses wheeled platform 12 on first loading section 41 side as illustrated in Fig. 5. Similarly to first sensing section 40, second sensing section 50 is a sensor that identifies a conveyance object and/or senses a conveyance object, and is configured with, for example, a stereo camera. Second sensing section 50 is disposed at the center of the upper surface of vehicle body section 31 and identifies and senses wheeled platform 12 on second loading section 51 side. In automatic movement device 30, vehicle body section 31 is provided with a sensing section that identifies a conveyance object and/or senses a conveyance object for each loading section.

First loading section 41 is disposed on the upper surface of vehicle body section 31, and loads wheeled platform 12 or engages with wheeled platform 12 to move wheeled platform 12. First loading section 41 is connected to wheeled platform 12 by moving upward from vehicle body section 31 of automatic movement device 30 and pressing or locking into the lower surface of placement section 13 (see Fig. 4). First loading section 41 includes acting section 42, loading member 43, support member 44, and base section 45. Acting section 42 locks into the unevenness formed on the lower surface of placement section 13, and is used when moving wheeled platform 12 in a state where casters 14 are grounded, serving as a so-called pin-shaped member used when towing wheeled platform 12. Acting section 42 is disposed at four positions on the upper surfaces of support members 44 so that acting sections 42 can lock the lower surface of placement section 13 in the front-rear and left-right directions. Loading member 43 is a plate-shaped member used when moving wheeled platform 12 in a loaded state where wheeled platform 12 is lifted. Loading member 43 is disposed at four positions on the upper surface of base section 45 so that loading members 57 can stably lift wheeled platform 12 stably. Base section 45 is an integral structure in which all loading members 43 are disposed, and is lifted and lowered by first lifting and lowering section 46. Support members 44 are two columnar-shaped members, and each is bridged in the vicinity of a pair of loading members 43. Support members 44 move up and down with respect to loading members 43. In first loading section 41, loading members 43 are lifted and lowered in accordance with the lifting and lowering movement of base section 45, and further, only acting sections 42 are lifted and lowered in accordance with the lifting and lowering movement of support members 44. First lifting and lowering section 46 is a drive section that lifts and lowers first loading section 41. First lifting and lowering section 46 lifts and lowers acting sections 52 by moving support members 44 between the lifted position and the lowered position, and lifts and lowers loading members 53 by moving base section 45 between the lifted position and the lowered position.

Similarly to first loading section 41, second loading section 51 is disposed on the upper surface of vehicle body section 31, and loads wheeled platform 12 or engages with wheeled platform 12 to move wheeled platform 12. Similarly to first loading section 41, second loading section 51 includes acting section 52, loading member 53, support member 54, and base section 55. Second loading section 51 and second lifting and lowering section 56 have the same configurations as first loading section 41 and first lifting and lowering section 46, and thus a detailed description thereof will be omitted. Each of the loading sections is independently lifted and lowered to load or engage with wheeled platform 12. In an example which is not part of the invention, two or more loading sections may be integrally lifted and lowered to load or engage with wheeled platform 12 as a conveyance object.

As illustrated in Fig. 1, shop 60 displays and sells the delivered articles. Shop 60 has one or more automatic movement devices 30, so that wheeled platform 12 can be automatically moved. Shop 60 has display shelf 69 on which the articles are displayed, and an operator displays the articles on the display shelf. Shop PC 61 is disposed in shop 60, and is configured as a management device that performs product management in shop 60. Shop PC 61 includes a control section, a storage section, and a communication section. Shop PC 61 has the same configuration as logistics PC 21, and thus a detailed description thereof is omitted.

Central control device 70 is a device that manages delivery system 10. Central control device 70 includes a control section, a storage section, and a communication section. The storage section stores delivery management information that is a database used for managing delivery of articles, map information that is a database of maps of logistics center 20 and shop 60, and the like. Central control device 70 has the same configuration as logistics PC 21, and thus a detailed description thereof will be omitted.

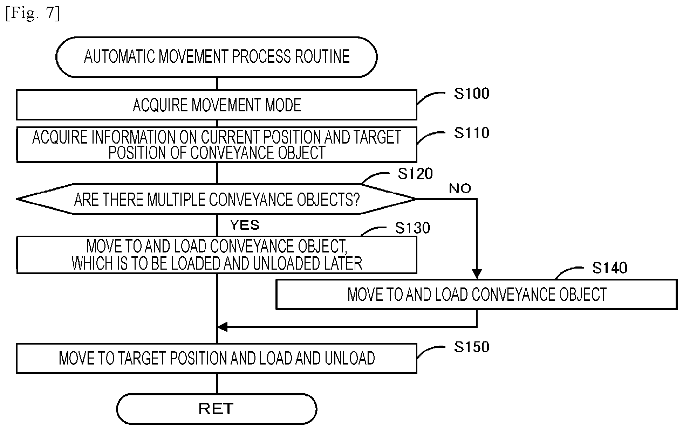

Next, in delivery system 10 configured as described above, a process in which automatic movement device 30 moves wheeled platform 12 will be described first. Here, a process in which automatic movement device 30 functioning as the AMR in logistics center 20 moves wheeled platform 12 to delivery vehicle 18 will be described as a specific example. Fig. 7 is a flowchart illustrating an example of an automatic movement process routine executed by control section 32 of automatic movement device 30. This routine is stored in storage section 33, and is executed after automatic movement device 30 is activated. When this routine is started, first, control section 32 of automatic movement device 30 acquires a movement mode (S100). The movement mode includes a loading mode in which wheeled platform 12 is loaded and moved and a towing mode in which wheeled platform 12 is locked and towed. The movement mode may be set in control section 32 in advance or may be acquired by communication from logistics PC 21. Next, control section 32 acquires identification information of a conveyance object and conveyance object information such as the current position of the conveyance object and the target position of the conveyance object after the movement (S110). The conveyance object information may be acquired by communication from logistics PC 21.

Next, control section 32 determines whether there are multiple conveyance objects (S120), and when there are multiple conveyance objects, control section 32 moves to the current position of the conveyance object, which is to be loaded and unloaded later, and connects the conveyance object to the loading section according to the movement mode (S130). At this time, control section 32 identifies wheeled platform 12 using first sensing section 40, and is configured to cause drive section 34 and first lifting and lowering section 46 to load wheeled platform 12 onto first loading section 41. When the first conveyance object is loaded onto first loading section 41, control section 32 moves to the current position of the next conveyance object, identifies wheeled platform 12 using second sensing section 50, and is configured to cause drive section 34 and second lifting and lowering section 56 to load wheeled platform 12 onto second loading section 51. By loading wheeled platform 12 in this manner, automatic movement device 30 can improve the efficiency of work of the loading and unloading.

On the other hand, when there are not multiple conveyance objects in S120, that is, when the number of conveyance objects is one, control section 32 moves to the current position of wheeled platform 12, identifies wheeled platform 12 using second sensing section 50, and is configured to cause drive section 34 and second lifting and lowering section 56 to load wheeled platform 12 onto second loading section 51 (S140). By loading wheeled platform 12 in this manner, automatic movement device 30 can perform the loading and unloading of wheeled platform 12 more quickly. After S140 or S130, control section 32 drives drive section 34 to move to the target position. Upon reaching the target position, control section 32 executes work for loading and unloading wheeled platform 12 (S150). When there are multiple conveyance objects, control section 32 repeatedly executes the same work on each wheeled platform 12. When the loading and unloading is completed, control section 32 ends this routine.

Here, a correspondence relationship between the elements of the present embodiment and the elements of the present disclosure will be clarified. Vehicle body section 31 of the present embodiment corresponds to the vehicle body section of the present disclosure, control section 32 corresponds to the control section, drive section 34 corresponds to the drive section, traveling wheels 35 correspond to the traveling wheels, operating section 36 corresponds to the operating section, and first loading section 41 and second loading section 51 correspond to the loading section. Acting section 42 and acting section 52 correspond to the acting section, first lifting and lowering section 46 and second lifting and lowering section 56 correspond to the lifting and lowering section, detection section 37 corresponds to the detection section, and first sensing section 40 and second sensing section 50 correspond to the sensing section. Automatic movement device 30 corresponds to the automatic movement device, delivery system 10 corresponds to the delivery system, and logistics PC 21, shop PC 61, and central control device 70 correspond to the management device.

Automatic movement device 30 of the present embodiment described above includes vehicle body section 31 that includes traveling wheels 35 and that is configured to travel, drive section 34 that is configured to drive traveling wheels 35, a loading section that is provided to vehicle body section 31 and that is configured to load wheeled platform 12 as a conveyance object or engage with the conveyance object to move wheeled platform 12, and control section 32 that is configured to control drive section 35 and a lifting and lowering section, and two or more of the loading sections are provided to vehicle body section 31. In automatic movement device 30, since two or more of the loading sections are provided to vehicle body section 31, more conveyance objects can be moved. Therefore, in automatic movement device 30, the movement of articles can be executed more efficiently. In addition, the loading section may include acting sections 42 and 52 that load a conveyance object or engage with the conveyance object, and a lifting and lowering section that lifts and lowers acting sections 42 and 52 with respect to vehicle body section 31. In this automatic movement device, since the acting section is lifted and lowered to move the conveyance object, the conveyance object can be loaded or engaged onto the loading section by a relatively easy operation. Further, each of the loading sections is independently lifted and lowered to load or engage with the conveyance object. In automatic movement device 30, it is possible to individually load or engage with multiple conveyance objects.

In addition, in vehicle body section 31, operating section 36 is erected adjacent to first loading section 41, and control section 32 is configured to cause drive section 34 and the lifting and lowering section to load or engage with wheeled platform 12, which is to be loaded and unloaded later, onto first loading section 41 closer to operating section 36. In automatic movement device 30, for example, in a structure where operating section 36 is erected to prevent the movement of a conveyance object, the conveyance object can be loaded and unloaded more efficiently. Further, vehicle body section 31 is provided with detection section 37 that detects surroundings of automatic movement device 30, and a sensing section that identifies wheeled platform 12 and/or senses the conveyance object. In automatic movement device 30, it is possible to automatically move using the detection results from detection section 37. In addition, in automatic movement device 30, the conveyance object can be loaded and unloaded more reliably by the sensing section. In addition, since the sensing section is provided for each loading section, automatic movement device 30 can sense each conveyance object, so that the conveyance object can be loaded and unloaded reliably, which is preferable.

Further, automatic movement device 30 includes operating section 36 erected in vehicle body section 31, first loading section 41 disposed adjacent to operating section 36, and second loading section 51 disposed adjacent to first loading section 41. Since automatic movement device 30 includes two loading sections, the structure and the size can be further simplified, and more conveyance objects can be moved more reliably. Furthermore, since traveling wheels 35 are omni wheels or mecanum wheels, traveling wheels 35 easily move in all directions in automatic movement device 35s, so that the movement efficiency can be enhanced. Delivery system 10 includes automatic movement device 30 and logistics PC 21 as a management device that manages automatic movement device 30. Since delivery system 10 includes automatic movement device 30 including multiple loading sections, the movement of articles can be executed more efficiently. In delivery system 10, automatic movement device 30 can be managed by the management device.

It is needless to say that the present disclosure is not in any way limited to the above-described embodiment, and the present disclosure can be achieved in various aspects as long as the aspects fall within the technical scope of the present disclosure.

For example, in the above-described embodiment, automatic movement device 30 includes acting sections 42 and 52 and loading members 43 and 53, and is configured to load and tow, but either one may be omitted. Also in automatic movement device 30, since multiple loading sections are provided, the movement of articles can be executed more efficiently. In cases where automatic movement device 30 includes a loading section that loads a conveyance object, the conveyance object need not have wheels such as casters.

In this automatic movement device, the structure can be further simplified when loading or engaging with multiple conveyance objects. In addition, automatic movement device 30 includes the two loading sections, first loading section 41 and second loading section 51, but the present invention is not particularly limited thereto, automatic movement device 30 may include three or more loading sections. Further, automatic movement device 30 includes integrated vehicle body section 31, the present invention is not particularly limited thereto, and may include a vehicle body section including one or more bent portions. Also in such an automatic movement device, the movement of articles can be executed more efficiently.

In the above-described embodiment, operating section 36 is erected on the end portion of vehicle body section 31, but the present invention is not particularly limited thereto, and need not include operating section 36. At this time, control section 32 may omit the process of loading or engaging with the conveyance object, which is to be loaded or unloaded later, onto the loading section closer to operating section 36. Automatic movement device 30 can load wheeled platform 12 from either first loading section 41 or second loading section 51 as long as operating section 36 does not exist.

In the above-described embodiment, detection section 37 and the sensing section are provided, but the present invention is not particularly limited thereto, and either one of them may be omitted. Also in this automatic movement device, as long as multiple loading sections are provided, the movement of articles can be executed more efficiently. In addition, in the above-described embodiment, the sensing section is provided in each of the loading sections, the present invention is not particularly limited thereto, and may omit one or more sensing sections. In this automatic movement device, the structure can be further simplified.

In the above-described embodiment, traveling wheels 35 are omni wheels or mecanum wheels, but the present invention is not particularly limited thereto, and may be ordinary wheels. In addition, in automatic movement device 30, four of traveling wheels 35 are used as driving wheels, but the present invention is not particularly limited thereto, and three or less wheels may be used as driving wheels, or four or more wheels may be used as driving wheels. For example, in the omni wheel, three traveling wheels 35 can be used as driving wheels. In addition, in the ordinary wheel, two driving wheels or four driving wheels may be used, the two driving wheels may be driven by one motor, the four driving wheels may be driven by one motor, or the four driving wheels may be driven by two motors. Automatic movement device 30 has two auxiliary wheels, but the present invention is not particularly limited thereto, and may have no auxiliary wheels or may have one or three or more auxiliary wheels. For example, traveling wheels 35 may include two driving wheels and one auxiliary wheel. In automatic movement device 30, the type of wheels, the number of driving wheels, the presence or absence of auxiliary wheels, the configuration of drive section 34 (for example, the number of motors), and the like need only be appropriately adopted according to the use thereof, the size of the conveyance object, and the like. From the viewpoint of moving freely in the front-rear and left-right directions, traveling wheels 35 are preferably omni wheels or mecanum wheels.

In the above-described embodiment, the present disclosure has been described as delivery system 10, but the configuration is not particularly limited thereto, and may be automatic movement device 30.

### Industrial Applicability

The automatic movement device and the delivery system of the present disclosure can be used in the technical field of a logistics system for delivering articles.

### Reference Signs List

10: delivery system, 12: wheeled platform, 13: loading section, 14: caster, 15: network, 18: delivery vehicle, 20: logistics center, 21: logistics PC, 22: control section, 23: storage section, 24: delivery management information, 25: map information, 28: communication section, 30: automatic movement device, 31: vehicle body section, 32: control section, 33: storage section, 34: drive section, 35: traveling wheel, 36: operating section, 37: detection section, 38: communication section, 40: first sensing section, 41: first loading section, 42: acting section, 43: loading member, 44: support member, 45: base section, 46: first lifting and lowering section, 50: second sensing section, 51: second loading section, 52: acting section, 53: loading member, 54: support member, 55: base section, 56: second lifting and lowering section, 60: shop, 61: shop PC, 69: display shelf, 70: central control device.

## Claims

1. An automatic movement device (30) used in a delivery system (10) configured to deliver an article, the automatic movement device (30) comprising:
a vehicle body section (31) that includes traveling wheels (35) and that is configured to travel;
a drive section (34) configured to drive the traveling wheels (35);
a loading section (41, 51) that is provided to the vehicle body section (31) and that is configured to load a conveyance object or engage with a conveyance object to move the conveyance object; and
a control section (32) configured to control the drive section (34) and the loading section (41, 51),
wherein two or more of the loading sections (41, 51) are provided to the vehicle body section (31),
**characterized in that**
each of the loading sections (41, 51) is configured to be independently lifted and lowered to load or engage with the conveyance object, and
the automatic movement device (30) is an automatic guided vehicle that moves along a line formed on a road surface, or an autonomous mobile robot that moves on free route by sensing surroundings.

2. The automatic movement device (30) according to claim 1, wherein
the loading section (41, 51) includes an acting section (42, 52) and a lifting and lowering section (46, 56), the acting section (42, 52) being configured to load the conveyance object or engage with the conveyance object, and the lifting and lowering section (46, 56) being configured to lift and lower the acting section (42, 52) with respect to the vehicle body section (31),

3. The automatic movement device (30) according to claim 1 or 2, wherein
in the vehicle body section (31), an operating section (36) is erected adjacent to one of the loading sections (41, 51), and
the control section (32) is configured to cause the drive section (34) and the loading section (41, 51) to load or engage with the conveyance object, which is to be loaded and unloaded later, onto a loading section (41, 51) closer to the operating section (36).

4. The automatic movement device (30) according to any one of claims 1 to 3, wherein
the vehicle body section (31) is provided with a detection section (37) and a sensing section (40, 50), the detection section (37) being configured to detect surroundings of the automatic movement device (30), and the sensing section (40, 50) being configured to identify the conveyance object and/or sense the conveyance object.

5. The automatic movement device (30) according to any one of claims 1 to 4, wherein
the vehicle body section (31) is provided with a sensing section (40, 50) configured to identify the conveyance object and/or sense the conveyance object, and
the sensing section (40, 50) is provided for each of the loading sections (41, 51).

6. The automatic movement device (30) according to any one of claims 1 to 5, further comprising:
an operating section (36) erected in the vehicle body section (31);
a first one of the loading sections (41) disposed adjacent to the operating section (36); and
a second one of the loading sections (51) disposed adjacent to the first one of the loading sections (41).

7. The automatic movement device (30) according to any one of claims 1 to 6, wherein
the traveling wheels (35) are omni-wheels or mecanum wheels.

8. A delivery system (10) comprising:
the automatic movement device (30) according to any one of claims 1 to 7; and
a management device (PC 21, PC 61, 70) configured to manage the automatic movement device (30).

## Patentansprüche

1. Automatische Bewegungsvorrichtung (30), die in einem Zuführungssystem (10) eingesetzt wird, das zum Zuführen eines Erzeugnisses ausgeführt ist, wobei die automatische Bewegungsvorrichtung (30) umfasst:
einen Fahrzeugkarosserie-Abschnitt (31), der Laufräder (35) enthält und der zum Fahren ausgeführt ist;
einen Antriebs-Abschnitt (34), der zum Antreiben der Laufräder (35) ausgeführt ist;
einen Lade-Abschnitt (41, 51), der an dem Fahrzeugkarosserie-Abschnitt (31) vorhanden ist und der so ausgeführt ist,
dass er ein Transportobjekt lädt oder mit dem Transportobjekt in Eingriff kommt, um das Transportobjekt zu bewegen;
sowie
einen Steuerungs-Abschnitt (32), der zum Steuern des Antriebs-Abschnitts (34) und des Lade-Abschnitts (41, 51) ausgeführt ist, wobei zwei oder mehr der Lade-Abschnitte (41, 51) an dem Fahrzeugkarosserie-Abschnitt (31) vorhanden sind,
**dadurch gekennzeichnet, dass**
jeder der Lade-Abschnitte (41, 51) so ausgeführt ist, dass er unabhängig angehoben und abgesenkt wird,
um das Transportobjekt zu laden oder mit ihm in Eingriff zu kommen, und
die automatische Bewegungsvorrichtung (30) ein fahrerloses Transportfahrzeug, das sich entlang einer auf einer Fahrbahn ausgebildeten Linie bewegt, oder ein autonomer mobiler Roboter ist, der sich entlang einer freien Route bewegt, indem er Umgebungen erkennt.

2. Automatische Bewegungsvorrichtung (30) nach Anspruch 1, wobei
der Lade-Abschnitt (41, 51) einen Funktions-Abschnitt (42, 52) sowie einen Anhebe-und-Absenk-Abschnitt (46, 56) einschließt, wobei der Funktions-Abschnitt (42, 52) so ausgeführt ist, dass er das Transportobjekt lädt oder mit dem Transportobjekt in Eingriff kommt, und der Anhebe-und-Absenk-Abschnitt (46, 56) so ausgeführt ist, dass er den Funktions-Abschnitt (42, 52) in Bezug auf den Fahrzeugkarosserie-Abschnitt (31) anhebt und absenkt.

3. Automatische Bewegungsvorrichtung (30) nach Anspruch 1 oder 2, wobei
in dem Fahrzeugkarosserie-Abschnitt (31) ein Betätigungs-Abschnitt (36) an einen der Lade-Abschnitte (41, 51) angrenzend aufgestellt ist, und
der Steuerungs-Abschnitt (32) so ausgeführt ist, dass er den Antriebs-Abschnitt (34) und den Lade-Abschnitt (41, 51) veranlasst, das Transportobjekt, das später geladen oder abgeladen werden soll, auf einen Lade-Abschnitt (41,51), der sich näher an dem Betätigungs-Abschnitt (36) befindet, zu laden oder mit ihm in Eingriff zu kommen.

4. Automatische Bewegungsvorrichtung (30) nach einem der Ansprüche 1 bis 3, wobei
der Fahrzeugkarosserie-Abschnitt (31) mit einem Erfassungs-Abschnitt (37) sowie einem Erkennungs-Abschnitt (40, 50) versehen ist, wobei der Erfassungs-Abschnitt (37) so ausgeführt ist, dass er die Umgebung der automatischen Bewegungsvorrichtung (30) erfasst, und der Erkennungs-Abschnitt (40, 50) so ausgeführt ist, dass er das Transportobjekt identifiziert und/oder das Transportobjekt erkennt.

5. Automatische Bewegungsvorrichtung (30) nach einem der Ansprüche 1 bis 4, wobei
der Fahrzeugkarosserie-Abschnitt (31) mit einem Erkennungs-Abschnitt (40, 50) versehen ist, der so ausgeführt ist, dass er das Transportobjekt identifiziert und/oder das Transportobjekt erkennt, und
der Erkennungs-Abschnitt (40, 50) für jeden der Lade-Abschnitte (41, 51) vorhanden ist.

6. Automatische Bewegungsvorrichtung (30) nach einem der Ansprüche 1 bis 5, die des Weiteren umfasst:
einen Betätigungs-Abschnitt (36), der in dem Fahrzeugkarosserie-Abschnitt (31) aufgestellt ist;
einen ersten der Lade-Abschnitte (41), der an den Betätigungs-Abschnitt (36) angrenzend angeordnet ist; sowie
einen zweiten der Lade-Abschnitte (51), der an den ersten der Lade-Abschnitte (41) angrenzend angeordnet ist.

7. Automatische Bewegungsvorrichtung (30) nach einem der Ansprüche 1 bis 6, wobei
die Laufräder (35) Allseitenräder (omni-wheels) oder Mecanum-Räder sind.

8. Zuführungssystem (10), das umfasst:
die automatische Bewegungsvorrichtung (30) nach einem der Ansprüche 1 bis 7, sowie eine Verwaltungsvorrichtung (PC 21, PC 61, 70), die zum Verwalten der automatischen Bewegungsvorrichtung (30) ausgeführt ist.

## Revendications

1. Dispositif à déplacement automatique (30) utilisé dans un système de distribution (10) configuré pour distribuer un article, le dispositif à déplacement automatique (30) comprenant :
une section de corps de véhicule (31) qui comporte des roues de translation (35) et qui est configurée pour se déplacer ;
une section d'entraînement (34) configurée pour entraîner les roues de translation (35) ;
une section de chargement (41, 51) qui est agencée sur la section de corps de véhicule (31) et qui est configurée pour charger un objet de transport ou mettre en prise un objet de transport pour déplacer l'objet de transport ; et
une section de commande (32) configurée pour commander la section d'entraînement (34) et la section de chargement (41, 51), dans lequel deux sections de chargement (41, 51) ou plus sont agencées sur la section de corps de véhicule (31),
**caractérisé en ce que**
chacune des sections de chargement (41, 51) est configurée pour être soulevée et abaissée indépendamment pour charger ou mettre en prise l'objet de transport, et
le dispositif à déplacement automatique (30) est un véhicule à guidage automatique qui se déplace le long d'une ligne formée sur une surface de route, ou un robot mobile autonome qui se déplace sur un parcours libre en captant les environs.

2. Dispositif à déplacement automatique (30) selon la revendication 1, dans lequel
la section de chargement (41, 51) comporte une section d'actionnement (42, 52) et une section de levage et d'abaissement (46, 56), la section d'actionnement (42, 52) étant configurée pour charger l'objet de transport ou mettre en prise l'objet de transport, et la section de levage et d'abaissement (46, 56) étant configurée pour soulever et abaisser la section d'actionnement (42, 52) par rapport à la section de corps de véhicule (31).

3. Dispositif à déplacement automatique (30) selon la revendication 1 ou 2, dans lequel
dans la section de corps de véhicule (31), une section d'opération (36) est érigée à proximité adjacente de l'une des sections de chargement (41, 51), et
la section de commande (32) est configurée pour amener la section d'entraînement (34) et la section de chargement (41, 51) à charger ou mettre en prise l'objet de transport, qui doit être chargé et déchargé plus tard, sur une section de chargement (41, 51) plus proche de la section d'opération (36).

4. Dispositif à déplacement automatique (30) selon l'une quelconque des revendications 1 à 3, dans lequel
la section de corps de véhicule (31) est équipée d'une section de détection (37) et d'une section de captage (40, 50), la section de détection (37) étant configurée pour détecter des environs du dispositif à déplacement automatique (30), et la section de captage (40, 50) étant configurée pour identifier l'objet de transport et/ou capter l'objet de transport.

5. Dispositif à déplacement automatique (30) selon l'une quelconque des revendications 1 à 4, dans lequel
la section de corps de véhicule (31) est équipée d'une section de captage (40, 50) configurée pour identifier l'objet de transport et/ou capter l'objet de transport, et
la section de captage (40, 50) est prévue pour chacune des sections de chargement (41, 51).

6. Dispositif à déplacement automatique (30) selon l'une quelconque des revendications 1 à 5, comprenant en outre :
une section d'opération (36) érigée dans la section de corps de véhicule (31) ;
une première des sections de chargement (41) disposée à proximité adjacente de la section d'opération (36) ; et
une seconde des sections de chargement (51) disposée à proximité adjacente de la première des sections de chargement (41).

7. Dispositif à déplacement automatique (30) selon l'une quelconque des revendications 1 à 6, dans lequel
les roues de translation (35) sont des roues omnidirectionnelles ou roues mecanum.

8. Système de distribution (10) comprenant :
le dispositif à déplacement automatique (30) selon l'une quelconque des revendications 1 à 7 ; et
un dispositif de gestion (PC 21, PC 61, 70) configuré pour gérer le dispositif à déplacement automatique (30).
